# EUROPÄISCHE PATENTANMELDUNG

(11) **EP 4 394 218 A1**
(43) Veröffentlichungstag der Anmeldung: **03.07.2024**
(21) Anmeldenummer: 23211939.6
(22) Anmeldetag: 24.11.2023
(51) Int. Cl.: F16K 1/32, F16K 37/00

(54) **HUBVENTIL FÜR FLUIDE MEDIEN SOWIE VORRICHTUNG ZUR VOLUMENSTROMBESTIMMUNG MITTELS DIFFERENZDRUCKMESSUNG**

(30) Priorität: 27.12.2022 DE 102022134849
(71) Anmelder: Oventrop GmbH & Co. KG, 59939 Olsberg (DE)
(72) Erfinder: Bolte, Julian, 59757 Arnsberg (DE)
(74) Vertreter: Köchling, Marietta

(57) **Zusammenfassung**

Die Erfindung betrifft ein Hubventil für fluide Medien mit einem Gehäuse (1), das einen Strömungskanal (2) mit einem Zulaufstutzen (3) und einem Ablaufstutzen (4) aufweist und eine Ventilspindel (5) mit einem Ventilkegel (6), der mit einem im Strömungskanal ausgebildeten Ventilsitz (7) korrespondiert, wobei im Bereich des Ventilkegels (6) der Ventilspindel (5) eine Einrichtung (8) zur Differenzdruckmessung angeordnet ist, die mit dem statischen Druck (9) der Strömung und dem Gesamtdruck (10) beaufschlagt ist, der stirnseitig am Ventilkegel (6) ansteht und so den Differenzdruck bildet, dass die Einrichtung (8) aus einem Foliensensor (11) besteht, der elastisch beweglich in der Ventilspindel (5) positioniert ist, um den Foliensensor (11) durch den Differendruck elastisch zu bewegen, und dass das vom Foliensensor (11) generierte Signal dazu ausgebildet ist, zu einer Messwert-Einrichtung transferiert zu werden, wobei die Messwert-Einrichtung dazu ausgebildet ist, mit mindestens mehreren Vorrichtungen zu kommunizieren.

## Beschreibung

Die Erfindung betrifft ein Hubventil für fluide Medien mit einem Gehäuse, das einen Strömungskanal mit einem Zulaufstutzen und einem Ablaufstutzen aufweist und eine Ventilspindel mit einem Ventilkegel, der mit einem im Strömungskanal ausgebildeten Ventilsitz korrespondiert.

Solche Hubventile sind insbesondere für gasförmige oder flüssige Medien im Bereich der Versorgungstechnik in Gebäuden bekannt. Üblicherweise wird als fluides Medium Wasser genutzt.

Im Stand der Technik sind verschiedene Armaturen ähnlicher Art bekannt. Beispielsweise ist aus der EP 3 353 616 B1 eine Armatur bekannt, bei der eine Einrichtung zur Erfassung des Volumenstroms, dort als Durchflussabschnitt bezeichnet, und die Einrichtung zur Beeinflussung des Volumenstroms als Ventilabschnitt bezeichnet sind. Die in dieser Einrichtung zur Erfassung des Volumenstroms verwendete Messtechnik basiert auf Ultraschall. Obwohl bei dieser Anordnung beide Einrichtungen in einem einstückigen Gehäuse untergebracht sind, wird aufgrund der Kugelhahn-Ventiltechnik einerseits und der erforderlichen Messstreckenlänge des Ultraschall-Messprinzips andererseits eine größere Einbaulänge der Armatur beziehungsweise des Durchflussreglers benötigt. Außerdem müssen jeweils für den sendenden und empfangenden Sensor der Ultraschall-Messtechnik in Strömungsrichtung hintereinander Durchbrüche im Armaturengehäuse geschaffen werden, in die die Sensoren exakt zu positionieren sind. Auch ist die Anordnung des Durchflussabschnittes in Strömungsrichtung gesehen hinter dem Ventilabschnitt von Nachteil, weil die vom Ventilabschnitt erzeugten Strömungsturbulenzen die nachgeschaltete Ultraschall-Messtechnik beeinflussen und eine erhöhte Anforderung an die Messwerterfassung stellen.

Aus der EP 2 898 239 B1 ist eine Armatur bekannt, bei der die Einrichtung zur Erfassung und die Einrichtung zur Beeinflussung des Volumenstromes in ein Armaturengehäuse integriert sind. Hierbei ist zwar die Einrichtung zur Erfassung des Volumenstromes, die auch hier auf die Ultraschall-Messtechnik zurückgreift, in Strömungsrichtung der Einrichtung zur Beeinflussung des Volumenstromes (Drosselkörper des Strangregulierventils) vorgeschaltet, die benötigte Messstreckenlänge führt aber auch hier zu einer größeren Einbaulänge der Armatur.

Eine Alternative zur Erfassung des Volumenstromes mit Ultraschallsensoren ist durch die Verwendung von Drucksensoren gegeben, die zum Beispiel vor und hinter dem Drosselkörper eines Ventils angeordnet sind und den Differenzdruck über dem Ventil messen. Mit Kenntnis der Durchflusskennlinie des Ventiles (Volumenstrom als Funktion des Differenzdruckes und der Ventilhubstellung) kann dann der Volumenstrom für einen Betriebspunkt ermittelt werden.

Lehrbuchmäßig lassen sich die Drucksensoren auch so einsetzen, dass sie aus dem physikalischen Grundprinzip von Bernoulli eine Volumenstromberechnung ermöglichen, wobei ein Drucksensor den statischen und ein Drucksensor den Gesamtdruck erfasst und aus der Differenz eine Auswerteeinheit den dynamischen, auch Staudruck genannten Druck berechnet. Mit Kenntnis des Strömungsquerschnitts an der Messstelle ist dann der Volumenstrom ebenfalls zu berechnen (Prandtlrohr).

Drucksensoren, die für solche Aufgaben Anwendung finden, sehr platzsparend und insbesondere sehr flach sind, sind im Stand der Technik als Foliensensoren bekannt.

So beschreibt beispielsweise die DE 19 600 178 A1 eine Volumenstrommesseinrichtung, die mindestens einen elektrischen Foliensensor zur Detektion, unter anderem von Druckschwankungen aufweist, welcher im Flüssigkeitsstrom auf einem Sensorträger angeordnet ist und mit einer flüssigkeitsdichten Hüllfolie ummantelt ist.

Ein weiteres Beispiel für die Anwendung von Foliensensoren zeigt die EP 2 255 169 B1, bei der der Foliensensor eine erste Trägerfolie aufweist, die wenigstens eine erste Leiterbahn aufweist. Die erste Leiterbahn ist vorzugeweise als leitfähige Schicht direkt auf der ersten Trägerfolie aufgebracht. Des Weiteren enthält der Foliensensor eine zweite Trägerfolie, die wenigstens eine Leiterbahn aufweist. Diese zweite Leiterbahn des Foliensensors ist vorzugsweise direkt auf der zweiten Trägerfolie angebracht. Zwischen der ersten und der zweiten Trägerfolie ist wenigstens ein elektrisches Bauelement angeordnet. Das elektrische Bauelement ist vorzugsweise mittels der ersten und der zweiten Leiterbahn elektrisch kontaktiert.

Hubventile, die als Heizkörperventile eingesetzt werden und einen elektrischen Antrieb aufweisen, sowie eine Erkennung der Hubstellung, sind beispielsweise aus der EP 3 483 690 A1 bekannt.

Auch Hubventile sind bekannt, bei denen der Durchfluss für eine vorgegebene Hubstellung konstant gehalten wird, indem der Differenzdruck über dem Hubventil auf eine Membrane wirkt, die auf einen in Reihe geschalteten weiteren, durch eine Regelhülse oder einen Ventilkegel gebildeten Strömungsquerschnitt wirkt. Da der Durchfluss differenzdruckunabhängig ist, kann für jede Hubstellung des Hubventils der Durchfluss aus der Ventilkennlinie abgenommen werden, wobei die Hubstellung über den Stellantrieb auslesbar ist. Beispiel hierfür ist die EP 3 179 173 B1.

In der älteren Patentanmeldung DE 10 2022 104 513.7 ist eine auf Foliensensortechnik basierende Durchflussmessung beschrieben anhand einer Armatur zum Erfassen und Beeinflussen des Volumenstromes. Basis sind hierbei druckempfindliche Foliensensoren, die den statischen Druck und den Gesamtdruck messen. Durch Anwendung der Benoulli-Gleichung und der vorhandenen Strömungsgeometrie kann der Strömungsdurchfluss ermittelt werden.

Bei den bekannten Hubventilen, mit denen die Möglichkeit einer Durchflussmessung besteht, sind die Sensoren vor und/ oder hinter dem Hubventilen in oder an den Rohrleitungen angebracht, so dass zusätzlicher Bauraum nötig wird und größerer Montageaufwand besteht. Ensprechendes gilt auch für die Geräte zur Messwerterfassung und -auswertung. Beispiel hierzu sind Hubventile mit positionserkennenden Stellantrieben, wodurch der Strömungsquerschnitt bestimmt ist, und Drucksensoren vor und hinter dem Hubventil, die unter Verwendung einer Differenzdruckmess und -auswerteeinheit den Durchfluss berechnen.

Die aus der älteren Anmeldung bekannte Anwendung von Folien-Sensortechnik zur Durchflussbestimmung ermöglicht bereits eine relativ platzsparende und insbesondere in ein Scheibenventil integrierte Lösung, jedoch sind aufgrund der Anwendung der Grundgleichung für die eindimensionale Behandlung von Strömungen nach Bernoulli zwei Foliensensoren erforderlich, die entsprechend auszulesen und die ausgelesenen Werte weiterzuverarbeiten sind.

Ausgehend von diesem Stand der Technik liegt der Erfindung die Aufgabe zugrunde, ein Hubventil sowie eine Vorrichtung zur Volumenstrombestimmung mittels Differenzdruckmessung zu schaffen, insbesondere mit einer messtechnischen Einrichtung zum Erfassen und Beeinflussen des Volumenstromes, welches sehr wenig Einbauraum in einer versorgungstechnischen Anlage benötigt und mit einer geringen Anzahl von Bauteilen auskommt, so dass es einfach zu montieren ist und nur gering schmutzungsanfällig ist.

Zur Lösung dieser Aufgabe wird vorgeschlagen, dass im Bereich des Ventilkegels der Ventilspindel eine Einrichtung zur Differenzdruckmessung angeordnet ist, wobei die Einrichtung ausgebildet ist, mit dem statischen Druck der Strömung und dem Gesamtdruck beaufschlagt zu werden, der stirnseitig am Ventilkegel ansteht und ausgebildet ist, so den Differenzdruck zu bilden, dass die Einrichtung aus mindestens einem Foliensensor besteht, der elastisch beweglich in der Ventilspindel oder am Ventilkegel positioniert ist, um den Foliensensor durch den Differendruck elastisch zu bewegen, und dass das vom Foliensensor generierte Signal dazu ausgebildet ist, zu einer Messwert-Einrichtung transferiert zu werden, wobei die Messwert-Einrichtung dazu ausgebildet ist, mit mindestens einer der folgenden Vorrichtungen zu kommunizieren:
- Auswerteeinheit
- Regel- und Steuervorrichtung
- Einrichtung zur Beeinflussung des Volumenstroms
- Stellantrieb,
wobei die Kommunikation drahtlos oder drahtgebunden ausgebildet ist.

Hierbei wird im Bereich des Ventilkegels der Ventilspindel die Einrichtung zur Differenzdruckmessung positioniert, wobei der Differenzdruck durch den statischen Druck der Strömung im Zulaufstutzen des Hubventils und durch den Gesamtdruck an der Stirnseite des Ventilkegels des Hubventils gebildet ist.

Die Einrichtung zur Differenzdruckmessung besteht hierbei insbesondere aus einer Membran, die sich durch den Differenzdruck wölben beziehungsweise ausdehnen kann, wobei mit der Membran mindestens ein Foliensensor verbunden ist.

Das aus der Einrichtung zur Differenzdruckmessung generierte Signal wird vom Foliensensor über eine Kabelverbindung oder gegebenenfalls auch drahtlos übertragen. Das Wirkprinzip lässt sich vereinfacht auf die Bernoulli-Gleichung zurückführen, nach der die Summe aus geodätischem Druck, dynamischem Druck und statischem Druck entlang einer Stromröhre konstant bleibt und dem Gesamtdruck entspricht. Durch Abgreifen des Gesamtdruckes und des statischen Druckes kann mit der Fluiddichte, zum Beispiel für Wasser, die Strömungsgeschwindigkeit berechnet werden. Mit Kenntnis des Strömungsquerschnittes lässt sich dann der Massenstrom mit der Kontinuitätsgleichung berechnen.

Gemäß der Erfindung werden die beiden Drücke nicht separat gemessen, sondern es wird direkt der Differenzdruck erfasst und zwar über den Foliensensor, der die Einrichtung zur Messung des Differenzdruckes bildet. Hierdurch wird der statische Druck so geleitet, dass dieser Druck auf den Foliensensor einwirkt. Auf einer dieser Einwirkstelle gegenüberliegender Seite des Foliensensors wirkt der Gesamtdruck, beispielsweise über eine Zuflussöffnung im Ventilkegel.

Vorzugsweise ist vorgesehen, dass der Foliensensor auf einer Membran angeordnet ist, die sich durch einen anstehenden Differenzdruck wölben oder/ und dehnen kann.

Auch kann vorgesehen sein, dass der Foliensensor auf elastischem Trägermaterial angeordnet ist.

Bevorzugt kann auch vorgesehen sein, dass der Foliensensor als Dehnungsmessstreifen ausgebildet ist.

Insbesondere ist auch vorgesehen, dass die Ventilspindel in einem Einbaustutzen des Gehäuses längsverschieblich angeordnet ist.

Besonders bevorzugt ist vorgesehen, dass die Ventilspindel einen einenends geschlossenen Hohlraum aufweist, der von dem Endbereich, welcher dem Ventilkegel abgewandt ist, bis zum Ventilkegel und den Ventilkegel durchgreifend in eine Ausmündung aus dem Ventilkegel verläuft, die in den Strömungskanal mündet, dass die Ventilspindel eine aus dem Hohlraum quer ausmündende Öffnung aufweist, die offen in einen Kanal eines Kopfstückes ausmündet, welches in einen ersten Einbaustutzen des Gehäuses eingesetzt ist, die Ventilspindel abgedichtet über den möglichen Stellweg der Ventilspindel umgibt und ebenso die Mündung des Kanals des Kopfstückes über die Länge des Stellweges dichtend umgibt, wobei der Kanal des Kopfstückes über eine Druckleitung mit einem zweiten Einbaustutzen des Gehäuses verbunden ist, der vom Zulaufstutzen in Strömungsrichtung vor dem Ventilsitz abgezweigt ist und in den der Strömungskanal mündet, dass in den Hohlraum nahe von dessen Mündung in den Strömungskanal der Foliensensor gegebenenfalls mit weiteren diesen haltenden Teilen eingesetzt ist, der so ausgebildet ist, dass seine erste Wirkfläche vom Gesamtdruck beaufschlagt ist und seine zweite, der ersten Wirkfläche gegenüberliegende Wirkfläche vom statischen Druck beaufschlagt ist

Hierdurch wird eine sehr kompakte Bauweise erreicht, wobei der statische Druck beispielsweise über eine Druckleitung oder Verbindung bis in das Innere der Ventilspindel geleitet wird, wo dieser Druck auf den Foliensensor einwirkt. Auf der entgegengesetzten Seite des Foliensensors wirkt der Gesamtdruck, der über eine Öffnung im Ventilkegel auf den Foliensensor geleitet wird. Da die Ventilspindel bei der Benutzung eine Hubbewegung ausführt, ist in dem Führungsbereich der Ventilspindel in dem Kopfstück des Ventiles zwischen zwei Dichtstellen ein Druckraum vorgesehen, der es ermöglicht, für den gesamten Hubbereich den statischen Druck in das Innere der Ventilspindel zu leiten.

Hierbei ist bevorzugt vorgesehen, dass der Kanal als Ringkanal ausgebildet ist und die Ventilspindel abgedichtet umgibt.

Bevorzugt ist auch vorgesehen, dass der Foliensensor mittels einer Kabelverbindung durch die Ventilspindel hindurch mit einer das übermittelte Signal verarbeitenden Einrichtung verbunden ist.

Eine bevorzugte Weiterbildung wird darin gesehen, dass der Bereich des Hohlraumes der Ventilspindel, in den der Foliensensor eingesetzt ist, trichterförmig ausgebildet ist, und zwar an seinem dem Ventilkegel zugewandten Ende, und der Ventilkegel in seinem der Ventilspindel zugewandten Ende ebenfalls trichterförmig derart ausgebildet ist, dass zwischen den Endrändern der so gebildeten Trichter eine Einspannstelle oder Montagestelle für die Einrichtung zur Differenzdruckmessung ausgebildet ist, zwischen welcher der äußere Rand dieser Einrichtung fixiert ist.

Je nach Ausführung des Foliensensors kann dieser auf einer Membran angebracht sein, so dass bei einer Ausdehnung der Membran bei der Differenzdruckbildung die Oberflächenspannung der Membran auf den Foliensensor übertragen wird.

Es ist aber auch möglich, den Differenzdruck direkt auf den Foliensensor wirken zu lassen, wenn der Sensor selbst mit einem geeigneten Trägermaterial verbunden ist.

Vorzugsweise zur Aufnahme der Membran beziehungsweise des Foliensensors direkt ist einerseits die Ventilspindel an ihrem dem Ventilkegel hingerichteten Ende trichterförmig ausgeformt, andererseits der Ventilkegel mit seiner zur Ventilspindel hingerichteten Seite ebenfalls trichterförmig derart ausgebildet, dass zwischen den Rändern der beiden Trichter sich eine Einspannstelle für die Einrichtung zur Messung des Differenzdruckes ergibt, so dass diese Einrichtung sehr einfach und platzsparend angeordnet ist.

Gegenstand der Erfindung ist ferner eine Vorrichtung zur Volumenbestimmung mit Differenzdruckmessung, enthaltend ein Hubventil mit den Merkmalen des Anspruches 1 und/ oder einem der Merkmale der Ansprüche 2 bis 9, mittels Anwendung der Bernoulli-Gleichung bei bekannter Strömungsgeometrie des Hubventils.

Vorzugsweise ist dabei vorgesehen, dass die Vorrichtung wenigstens einen der folgenden Bestandteile enthält
- elektronische Einrichtung zur Erfassung des Volumenstromes
- elektronisch geregelte Einrichtung zur Beeinflussung des Volumenstromes, die dazu bestimmt ist, Messignale aus der Einrichtung zur Erfassung des Volumenstromes für Stellsignale zur Beeinflussung des Volumenstromes durch die elektronisch geregelte Einrichtung zu verwenden.

Zudem ist vorgesehen, dass der Einrichtung zur Erfassung des Volumenstromes eine elektrische Auswerteeinheit zugeordnet ist, die von einem Foliensensor direkt den aus dem statischen Druck und Gesamtdruck gebildeten Differenzdruck erfasst und mit diesem so ermittelten Staudruck und der Fluiddichte in einem ersten Rechenschritt die Strömungsgeschwindigkeit des Volumenstromes und in einem zweiten Rechenschritt mit Kenntnis des Strömungsquerschnitts und der Fluiddichte im Hubventil den Volumenstrom berechnet.

Auch ist bevorzugt vorgesehen, dass in die elektronische Auswerteeinheit eine Regel- und/ oder Steuervorrichtung integriert ist, die den berechneten Volumenstrom mit einem vorgegebenen Sollwert vergleicht und einen Stellbefehl an die Einrichtung zur Beeinflussung des Volumenstromes übermittelt. Bevorzugt ist auch vorgesehen, dass die elektronische Auswerteeinheit in oder an der Einrichtung zur Erfassung des Volumenstromes angeordnet ist oder dass die elektronische Auswerteeinheit Bestandteil der Einrichtung zur Beeinflussung des Volumenstromes ist.

Ein Ausführungsbeispiel der Erfindung ist in den Zeichnungen dargestellt und im Folgenden näher beschrieben. Es zeigt:

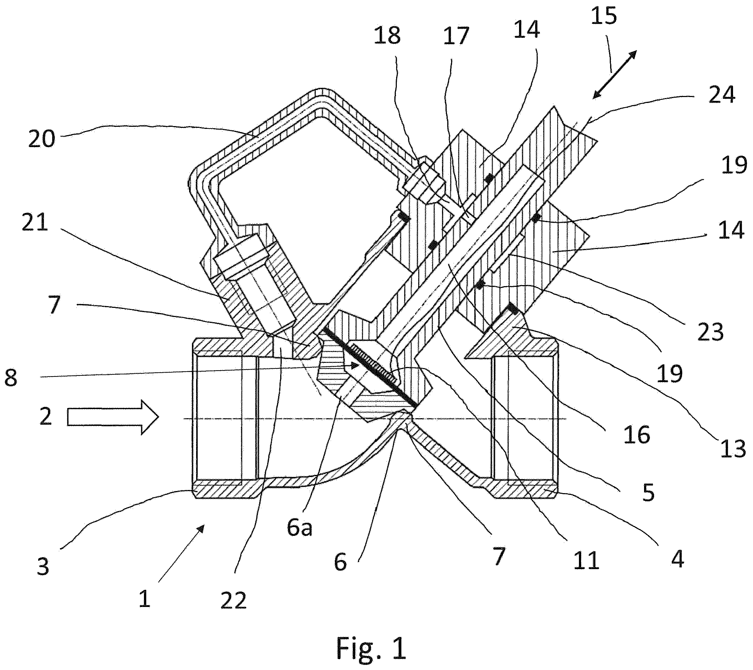

- Figur 1: ein Hubventil mit Anschlussteilen im Schnitt gesehen;
- Figur 2: eine Einzelheit des Hubventils in vergrößerter Ansicht;

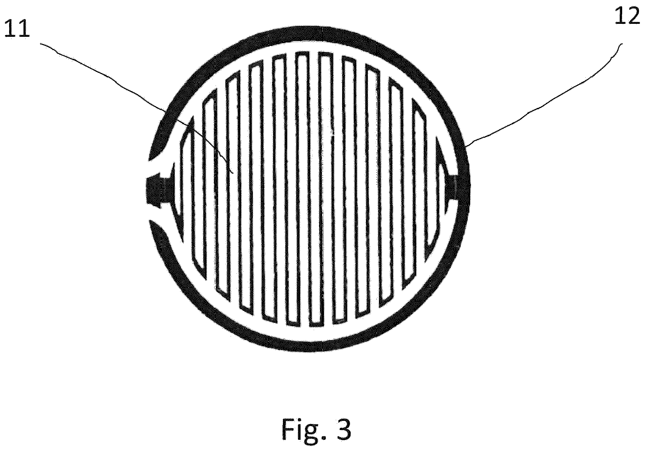

- Figur 3: eine Einzelheit in Ansicht und in Seitenansicht;

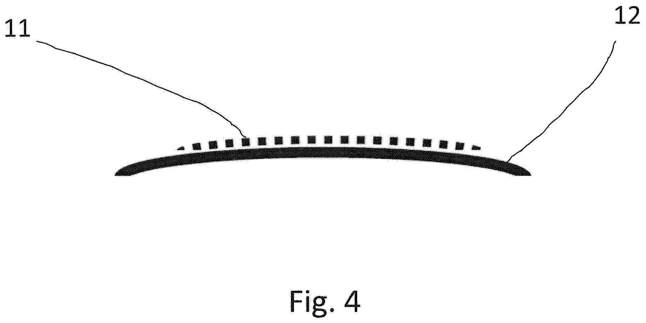

- Figur 4: eine Einzelheit in Ansicht und in Seitenansicht.

In der Zeichnung ist ein Hubventil für fluide Medien, insbesondere Wasser, mit einem Gehäuse 1 gezeigt. Dessen Gehäuse 1 weist einen Strömungskanal 2 mit einem Zulaufstutzen 3 und einem Ablaufstutzen 4 auf. Das Hubventil weist eine Ventilspindel 5 mit endseitigem Ventilkegel 6 auf, der auf einen im Strömungskanal 2 ausgebildeten Ventilsitz 7 wirkt. Im Bereich des Ventilkegels 6 der Ventilspindel 5 ist eine Einrichtung 8 zur Differenzdruckmessung angeordnet. Diese Einrichtung 8 ist derart ausgebildet, dass sie mit dem statischen Druck 9 und dem Gesamtdruck 10 beaufschlagt ist, der stirnseitig am Ventilkegel 6 ansteht, um so den Differenzdruck zu bilden. Die Einrichtung 8 besteht aus mindestens einem Foliensensor 11, der elastisch beweglich im Hohlraum der Ventilspindel 5 beziehungsweise des Ventilkegels 6 positioniert ist, um den Foliensensor 11 durch den Differenzdruck elastisch zu bewegen. Das von dem Foliensensor 11 generierte Signal ist dazu ausgebildet, zu einer in der Zeichnung nicht dargestellten Messwert-Einrichtung transferiert zu werden, wobei die Messwert-Einrichtung dazu ausgebildet ist, mit unterschiedlichen Vorrichtungen zu kommunizieren, beispielsweise einer Auswerteeinheit, einer Regel- und Steuervorrichtung, einer Einrichtung zur Beeinflussung des Volumenstromes und einem Stellantrieb zur Verlagerung der Ventilspindel 5. Die Kommunikation mit diesen Elementen kann drahtlos oder drahtgebunden erfolgen.

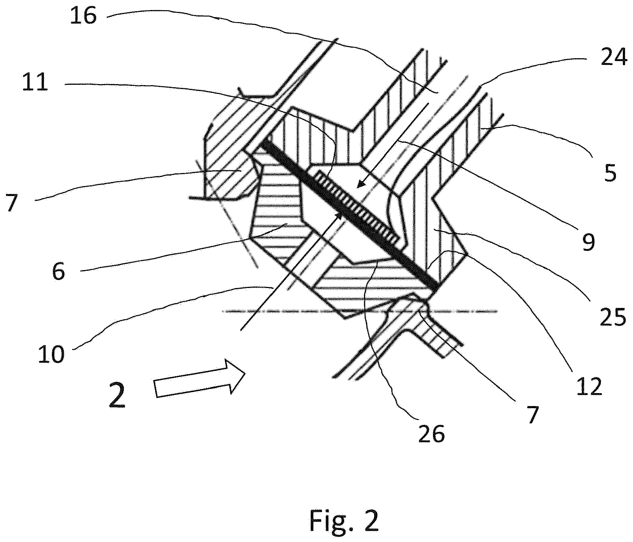

Wie insbesondere in Figur 2 ersichtlich, ist der Foliensensor 11 auf einer Membran 12 angeordnet, die sich durch einen anstehenden Differenzdruck wölben und/ oder dehnen kann. Insbesondere ist natürlich der Foliensensor 11 auf elastischem Trägermaterial angeordnet. Der Foliensensor 11 kann auch als Dehnungsmessstreifen ausgebildet sein. Die Ventilspindel 5 ist in einem Einbaustutzen 13, insbesondere in einem in dem Einbaustutzen 13 angeordneten Kopfstück 14 längsverschieblich in Richtung des Bewegungspfeiles 15 angeordnet.

Die Ventilspindel 5 weist einen einenends geschlossenen Hohlraum 16 auf, der von dem in der Zeichnung oben angeordneten geschlossenen Endbereich, der dem Ventilkegel 6 abgewandt ist, bis zum Ventilkegel 6 verläuft und auch den Ventilkegel 6 durchgreift und zwar bis zu einer Ausmündung aus dem Ventilkegel 6 (in der Zeichnung unten), die in den Strömungskanal 2 mündet.

Zusätzlich weist die Ventilspindel 5 eine aus dem Hohlraum 16 quer ausmündende Öffnung 17 auf, die offen in einen Kanal 18 des Kopfstückes 14 ausmündet, welches in den Einbaustutzen 13 des Gehäuses 1 eingesetzt ist. Das Kopfstück 14 umgibt die Ventilspindel 5 abgedichtet über den möglichen Stellweg der Ventilspindel 5. Dazu sind Dichtungen 19 angeordnet. Auch die Mündung des Kanals 18 des Kopfstückes 14 umgibt die Spindel abgedichtet.

Der Kanal 18 des Kopfstückes 14 ist über eine Druckleitung 20 mit einem zweiten Einbaustutzen 21 des Gehäuses 1 verbunden, der vom Zulaufstutzen 3 in Strömungsrichtung vor dem Ventilsitz 7 abgezweigt ist und in den der Strömungskanal 2 mündet. Die Mündung ist mit 22 bezeichnet.

In dem Hohlraum 16 ist nahe dessen Mündung in den Strömungskanal 2 der Foliensensor 11 gegebenenfalls mit den weiteren diesen haltenden Teilen eingesetzt.

Dieser ist derart ausgebildet und angeordnet, dass seine erste Wirkfläche vom Gesamtdruck 10 beaufschlagt ist und seine zweite, der ersten Wirkfläche gegenüberliegende Wirkfläche, vom statischen Druck 9 beaufschlagt ist.

Zusätzlich ist in dem Kopfstück 14 der Kanal 18 als Ringkanal 23 ausgebildet und umgibt so die Ventilspindel 5 ebenso durch die Dichtungen 19 abgedichtet.

Der Foliensensor 11 ist mittels einer Kabelverbindung 24, die dicht durch die Ventilspindel 5 hindurchgeführt ist, mit einer das übermittelte Signal verarbeitenden Einrichtung verbunden, was in der Zeichnung nicht gezeigt ist. Das Kabelverbindungsende überragt oben in der Zeichnung die Spindel 5.

Der Bereich des Hohlraumes 16 der Ventilspindel 5 und des Ventilkegels 6 in den der Foliensensor 11 eingesetzt ist, ist doppelt trichterförmig ausgebildet, und zwar an seinem dem Ventilkegel 6 zugewandten Ende. Der Ventilkegel 6 ist in seinem Innenraum, der in den Hohlraum 16 übergeht, in seinem der Ventilspindel 5 zugewandtem Ende ebenfalls trichterförmig derart ausgebildet, dass zwischen den beiden Endrändern der so gebildeten Trichter 25, 26 eine Einspannstelle oder Montagestelle für die Einrichtung 8 zur Differenzdruckmessung ausgebildet ist, zwischen welcher der äußere Rand dieser Einrichtung fixiert ist. Im Ausführungsbeispiel ist dies also der Rand der Membran 12.

Das in der Zeichnung dargestellt Hubventil ist in funktioneller Weise mit weiteren Bestandteilen einer Vorrichtung zur Volumenstrombestimmung mittels Differenzdruckmessung verbunden beziehungsweise verbindbar, nämlich einer elektronischen Einrichtung zur Erfassung des Volumenstromes, einer elektronisch geregelten Einrichtung zur Beeinflussung des Volumenstromes, die dazu bestimmt ist, Messsignale aus der Einrichtung zur Erfassung des Volumenstromes für Stellsignale zur Beeinflussung des Volumenstromes durch die elektronisch geregelte Einrichtung zu verwenden.

Durch die Erfindung wird ein Hubventil beziehungsweise eine entsprechende Vorrichtung zur Verfügung gestellt, die äußerst wenig Einbauraum benötigt, wenn ein Einbau in eine versorgungstechnische Anlage erfolgt, wobei auch nur wenige Bauteile erforderlich sind, die insgesamt einfach zu montieren sind und nur gering verschmutzungsanfällig sind.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

### Bezugszeichenliste:

- 1: Gehäuse
- 2: Strömungskanal
- 3: Zulaufstutzen
- 4: Ablaufstutzen
- 5: Ventilspindel
- 6: Ventilkegel
- 6a: Ausmündung
- 7: Ventilsitz
- 8: Einrichtung zur Differenzdruckmessung
- 9: statischer Druck
- 10: Gesamtdruck
- 11: Foliensensor
- 12: Membran
- 13: erster Einbaustutzen
- 14: Kopfstück
- 15: Bewegungsrichtung der Ventilspindel 5
- 16: Hohlraum
- 17: Öffnung
- 18: Kanal
- 19: Dichtung
- 20: Druckleitung
- 21: zweiter Einbaustutzen
- 22: Mündung
- 23: Ringkanal
- 24: Kabelverbindung
- 25: Trichter
- 26: Trichter

## Patentansprüche

1. Hubventil für fluide Medien mit einem Gehäuse (1), das einen Strömungskanal (2) mit einem Zulaufstutzen (3) und einem Ablaufstutzen (4) aufweist und eine Ventilspindel (5) mit einem Ventilkegel (6), der mit einem im Strömungskanal ausgebildeten Ventilsitz (7) korrespondiert, **dadurch gekennzeichnet, dass** im Bereich des Ventilkegels (6) der Ventilspindel (5) eine Einrichtung (8) zur Differenzdruckmessung angeordnet ist, wobei die Einrichtung ausgebildet ist, mit dem statischen Druck (9) der Strömung und dem Gesamtdruck (10) beaufschlagt zu werden, der stirnseitig am Ventilkegel (6) ansteht und ausgebildet ist, und so den Differenzdruck zu bilden, dass die Einrichtung (8) aus mindestens einem Foliensensor (11) besteht, der elastisch beweglich in der Ventilspindel (5) oder am Ventilkegel (6) positioniert ist, um den Foliensensor (11) durch den Differendruck elastisch zu bewegen, und dass das vom Foliensensor (11) generierte Signal dazu ausgebildet ist, zu einer Messwert-Einrichtung transferiert zu werden, wobei die Messwert-Einrichtung dazu ausgebildet ist, mit mindestens einer der folgenden Vorrichtungen zu kommunizieren:
- Auswerteeinheit
- Regel- und Steuervorrichtung
- Einrichtung zur Beeinflussung des Volumenstroms
- Stellantrieb,
wobei die Kommunikation drahtlos oder drahtgebunden ausgebildet ist.

2. Hubventil nach Anspruch 1, **dadurch gekennzeichnet, dass** der Foliensensor (11) auf einer Membran (12) angeordnet ist, die sich durch einen anstehenden Differenzdruck wölben oder/ und dehnen kann.

3. Hubventil nach Anspruch 1, **dadurch gekennzeichnet, dass** der Foliensensor (11) auf elastischem Träger material angeordnet ist.

4. Hubventil nach einem der Ansprüche 1 bis 3, **dadurch gekennzeichnet, dass** der Foliensensor (11) als Dehnungsmessstreifen ausgebildet ist.

5. Hubventil nach einem der Ansprüche 1 bis 4, **dadurch gekennzeichnet, dass** die Ventilspindel (5) in einem Einbaustutzen (13) des Gehäuses (1) längsverschieblich angeordnet ist.

6. Hubventil nach einem der Ansprüche 1 bis 5, **dadurch gekennzeichnet, dass** die Ventilspindel (5) einen einenends geschlossenen Hohlraum (16) aufweist, der von dem Endbereich, welcher dem Ventilkegel abgewandt ist, bis zum Ventilkegel (6) und den Ventilkegel (6)durchgreifend in eine Ausmündung (6a) aus dem Ventilkegel (6) verläuft, die in den Strömungskanal (2) mündet, dass die Ventilspindel (5) eine aus dem Hohlraum (16) quer ausmündende Öffnung (17) aufweist, die offen in einen Kanal (18) eines Kopfstückes (14) ausmündet, welches in einen ersten Einbaustutzen (13) des Gehäuses (1) eingesetzt ist, die Ventilspindel (5) abgedichtet über den möglichen Stellweg der Ventilspindel (5) umgibt und ebenso die Mündung (17) des Kanals (18) des Kopfstückes (14) über die Länge des Stellweges (15) dichtend umgibt, wobei der Kanal (18) des Kopfstückes (14) über eine Druckleitung (20) mit einem zweiten Einbaustutzen (21) des Gehäuses (1) verbunden ist, der vom Zulaufstutzen (3) in Strömungsrichtung vor dem Ventilsitz (7) abgezweigt ist und in den der Strömungskanal (2) mündet, dass in den Hohlraum (16) nahe von dessen Mündung in den Strömungskanal (2) der Foliensensor (11) gegebenenfalls mit weiteren dieser haltenden Teilen eingesetzt ist, der so ausgebildet ist, dass seine erste Wirkfläche vom Gesamtdruck (10) beaufschlagt ist und seine zweite, der ersten Wirkfläche gegenüberliegende Wirkfläche vom statischen Druck (9) beaufschlagt ist.

7. Hubventil nach Anspruch 6, **dadurch gekennzeichnet, dass** der Kanal (18) als Ringkanal (23) ausgebildet ist und die Ventilspindel (5) abgedichtet umgibt.

8. Hubventil nach einem der Ansprüche 1 bis 7, **dadurch gekennzeichnet, dass** der Foliensensor (11) mittels einer Kabelverbindung (24) durch die Ventilspindel (5) hindurch mit einer das übermittelte Signal verarbeitenden Einrichtung verbunden ist.

9. Hubventil nach Anspruch 8, **dadurch gekennzeichnet, dass** der Bereich des Hohlraumes (16) der Ventilspindel (5), in den der Foliensensor (11) eingesetzt ist, trichterförmig ausgebildet ist, und zwar an seinem dem Ventilkegel (6) zugewandten Ende, und der Ventilkegel (6) in seinem der Ventilspindel (5) zugewandten Ende ebenfalls trichterförmig derart ausgebildet ist, dass zwischen den Endrändern der so gebildeten Trichter (25, 26)eine Einspannstelle oder Montagestelle für die Einrichtung (8) zur Differenzdruckmessung ausgebildet ist, zwischen welcher der äußere Rand dieser Einrichtung (8) fixiert ist.

10. Vorrichtung zur Volumenstrombestimmung mittels Differenzdruckmessung, enthaltend ein Hubventil mit den Merkmalen des Anspruchs 1 und/ oder einem der Merkmale der Ansprüche 2 bis 9, mittels Anwendung der Bernoulli-Gleichung bei bekannter Strömungsgeometrie des Hubventils.

11. Vorrichtung nach Anspruch 10, **dadurch gekennzeichnet, dass** die Vorrichtung wenigstens einen der folgenden Bestandteile enthält
- elektronische Einrichtung zur Erfassung des Volumenstromes,
- elektronisch geregelte Einrichtung zur Beeinflussung des Volumenstromes, die dazu bestimmt ist, Messignale aus der Einrichtung zur Erfassung des Volumenstromes für Stellsignale zur Beeinflussung des Volumenstromes durch die elektronisch geregelte Einrichtung zu verwenden.

12. Vorrichtung nach Anspruch 10 oder 11, **dadurch gekennzeichnet, dass** der Einrichtung zur Erfassung des Volumenstromes eine elektrische Auswerteeinheit zugeordnet ist, die von einem Foliensensor (11) direkt den aus dem statischen Druck (9) und Gesamtdruck (10) gebildeten Differenzdruck erfasst und und mit diesem so ermittelten Staudruck und der Fluiddichte in einem ersten Rechenschritt die Strömungsgeschwindigkeit des Volumenstromes und in einem zweiten Rechenschritt mit Kenntnis des Strömungsquerschnitts und der Fluiddichte im Hubventil den Volumenstrom berechnet.

13. Vorrichtung nach einem der Ansprüche 10 bis 12, **dadurch gekennzeichnet, dass** in die elektronische Auswerteeinheit eine Regel- und/ oder Steuervorrichtung integriert ist, die den berechneten Volumenstrom mit einem vorgegebenen Sollwert vergleicht und einen Stellbefehl an die Einrichtung zur Beeinflussung des Volumenstromes übermittelt.

14. Vorrichtung nach einem der Ansprüche 10 bis 13, **dadurch gekennzeichnet, dass** die elektronische Auswerteeinheit in oder an der Einrichtung zur Erfassung des Volumenstromes angeordnet ist oder dass die elektronische Auswerteeinheit Bestandteil der Einrichtung zur Beeinflussung des Volumenstromes ist.
